# EUROPÄISCHE PATENTANMELDUNG

(11) **EP 0 819 593 A1**
(43) Veröffentlichungstag der Anmeldung: **21.01.1998**
(21) Anmeldenummer: 97111708.0
(22) Anmeldetag: 10.07.1997
(51) Int. Cl.: B62B 3/14

(54) **Halteteil für einen Rechner, insbesondere für einen Handscanner**

(30) Priorität: 16.07.1996 DE 29612195 U
(71) Anmelder: WANZL METALLWARENFABRIK GMBH, D-89336 Leipheim (DE)
(72) Erfinder: Blaha, Martin, 89335 Ichenhausen (DE)

(57) **Zusammenfassung**

Die Erfindung betrifft ein an einem Einkaufswagen angeordnetes Halteteil (1) für einen Rechner (8), insbesondere für einen Handscanner, wobei der Rechner (8) mit einer horizontal angeordneten Öffnung (9) ausgestattet ist und das Halteteil (1) Mittel zum Befestigen des Rechners (8) aufweist.
Es wird vorgeschlagen, zumindest ein Teil des Halteteiles (1) aus Draht zu fertigen und die zum Befestigen des Rechners (8) vorgesehenen Mittel durch einen Vorsprung (6) zu bilden, wobei der Vorsprung (6) zum Eingreifen in die am Rechner (8) vorgesehene Öffnung (9) bestimmt ist.

## Beschreibung

Die Erfindung betrifft ein an einem Einkaufswagen angeordnetes Halteteil für einen Rechner, insbesondere für einen Handscanner, wobei der Rechner mit einer horizontal angeordneten Öffnung ausgestattet ist und das Halteteil Mittel zum Befestigen des Rechners aufweist.

Bekannte Halteteile dieser Art sind aus Kunststoff gefertigt und werden gewöhnlich am Schiebegriff des Einkaufswagens angebracht. Da die Schiebegriffe unterschiedlich ausgebildet sind, ist es erforderlich, unterschiedliche Halteteile anzufertigen. Dazu sind verschiedene Spritzgußwerkzeuge erforderlich, was sich verteuernd auswirkt.

Die Aufgabe der Erfindung besteht darin, ein Halteteil der gattungsgemäßen Art so zu gestalten, daß es kostengünstig herstellbar ist und daß es auf einfache Weise an unterschiedliche Befestigungsbereiche, die sich an einem Einkaufswagen befinden, angepaßt werden kann.

Die Lösung der Aufgabe besteht darin, daß zumindest ein Teil des Halteteiles aus Draht gefertigt ist und daß die zum Befestigen des Rechners vorgesehenen Mittel durch einen Vorsprung gebildet sind, der zum Eingreifen in die am Rechner vorgesehene Öffnung bestimmt ist.

Die Erfindung nutzt in vorteilhafter Weise das Vorhandensein der horizontalen Öffnung am Rechner. Deshalb bedarf es in äußerst einfacher Weise nur eines Vorsprunges, um den Rechner sicher am Halteteil aufsetzen zu können. Da das Halteteil aus Draht gefertigt ist, kann dieses durch entsprechende Formänderung des Drahtes unterschiedlichen Befestigungsbereichen angepaßt werden.

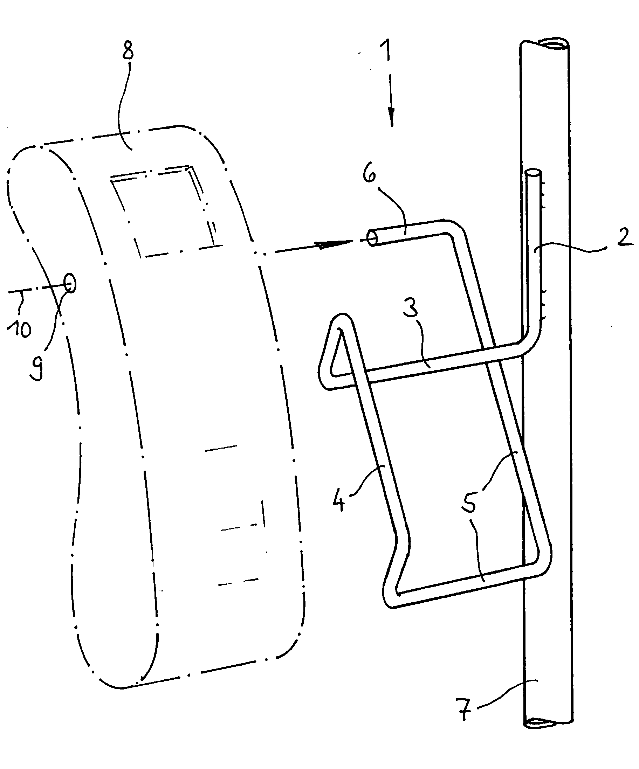

Die Erfindung wird anhand einer Zeichnung näher erläutert. Das Beispiel zeigt eine Stange 7 die beispielsweise an einer Längsseite eines nicht näher dargestellten Einkaufswagens befestigbar ist. Das zumindest teilweise aus Draht gefertigte Halteteil 1 ist mit einem Schenkel 2 an der Stange 7 angeschweißt. Vom im Beispiel senkrecht angeordneten Schenkel 2 führt ein horizontaler Abschnitt 3 weg, um einen quer zum Abschnitt 3 verlaufenden und erhöht angeordneten Anschlag 4 zu bilden, von dem aus in nahezu beliebiger Weise ein weiterer Abschnitt 5 wegführt, der in einem Vorsprung 6 mit kreisrundem Querschnitt endet, welcher parallel zum horizontalen Abschnitt 3 angeordnet ist. Die Zeichnung zeigt ferner einen Rechner 8, z.B. einen Handscanner, der mit einer horizontal angeordneten Öffnung 9 ausgestattet ist. Durch begrenztes Verschwenken des Rechners um die Längsachse 10 der horizontalen Öffnung 9 kann der Rechner 8 in eine Lage gebracht werden, in der er sich mit seiner Öffnung 9 voraus auf den Vorsprung 6 stecken läßt, bis er am weiteren Abschnitt 5 anstößt. Schwenkt man den so aufgesetzten Rechner 8 wieder in eine Position, wie in der Zeichnung gezeigt, liegt der Rechner 8 am weiteren Abschnitt 5 des Rechners 8 an, wobei er sich zwischen dem Anschlag 4 und der Stange 7 befindet und sich dadurch nicht von selbst vom Halteteil 1 lösen kann. Die Lage des Schwerpunktes des Rechners 8 bezüglich der Lage der horizontalen Öffnung 9 ist so gewählt, daß der Rechner 8 in einer auf das Halteteil 1 aufgesetzten Lage eine stabile Position einnimmt. Zum Abnehmen des Rechners 8 muß dieser, folgt man der Zeichnung, linksdrehend so weit aus der Zeichenebene herausgeschwenkt werden, bis der Anschlag 4 seine Funktion verliert. Dann kann der Rechner 8 entgegen der Pfeilrichtung zum Vorsprung 6 gelöst werden.

## Patentansprüche

1. An einem Einkaufswagen angeordnetes Halteteil (1) für einen Rechner (8), insbesondere für einen Handscanner, wobei der Rechner (8) mit einer horizontal angeordneten Öffnung (9) ausgestattet ist und das Halteteil (1) Mittel zum Befestigen des Rechners (8) aufweist, dadurch **gekennzeichnet,** daß zumindest ein Teil des Halteteiles (1) aus Draht gefertigt ist und daß die zum Befestigen des Rechners (8) vorgesehenen Mittel durch einen Vorsprung (6) gebildet sind, der zum Eingreifen in die am Rechner (8) vorgesehene Öffnung (9) bestimmt ist.

2. Halteteil nach Anspruch 1, dadurch **gekennzeichnet,** daß der Vorsprung (6) einen kieisrunden Querschnitt aufweist.

3. Halteteil nach Anspruch 1 oder 2, dadurch **gekennzeichnet,** daß der Vorsprung (6) zu den übrigen Teilen des Halteteiles (1) so angeordnet und seine Lage so gewählt ist, daß ein auf den Vorsprung (6) aufgesetzter Rechner (8) begrenzt verschwenkbar gelagert ist.

4. Halteteil nach einem der Ansprüche 1 bis 3, dadurch **gekennzeichnet,** daß durch den Vorsprung (6) und durch einen weiteren Abschnitt (5) Abstützstellen für einen vom Halteteil (1) getragenen Rechner (8) gebildet sind.
